(19) Europäisches Patentamt / European Patent Office / Office européen des brevets

(11) **EP 4 465 520 B1**

(12) **EUROPÄISCHE PATENTSCHRIFT**

(45) Veröffentlichungstag und Bekanntmachung des Hinweises auf die Patenterteilung:
**01.10.2025   Patentblatt 2025/40**

(21) Anmeldenummer: **23174011.9**

(22) Anmeldetag: **17.05.2023**

(51) Internationale Patentklassifikation (IPC):
**H02P 21/18** *(2016.01)*   **H02P 21/13** *(2006.01)*
**H02P 21/24** *(2016.01)*   **H02P 6/18** *(2016.01)*

(52) Gemeinsame Patentklassifikation (CPC):
**H02P 21/18; H02P 6/18; H02P 21/13; H02P 21/24**

(54) **VERFAHREN ZUR ERMITTLUNG DER DREHZAHL UND/ODER VON MOTORPARAMETERN**

METHOD FOR DETERMINING THE ROTATIONAL SPEED AND/OR MOTOR PARAMETERS

PROCÉDÉ DE DÉTERMINATION DE LA VITESSE DE ROTATION ET/OU DES PARAMÈTRES D'UN MOTEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**20.11.2024   Patentblatt 2024/47**

(73) Patentinhaber: **Düsselberg, David**
**40237 Düsseldorf (DE)**

(72) Erfinder:

• **Der Erfinder hat auf sein Recht verzichtet, als solcher bekannt gemacht zu werden.**

(74) Vertreter: **Brinkmann & Partner**
**Patentanwälte**
**Partnerschaft mbB**
**Am Seestern 8**
**40547 Düsseldorf (DE)**

(56) Entgegenhaltungen:
**EP-A1- 3 723 273     CN-A- 115 347 830**

**Beschreibung**

Die Erfindung betrifft ein Verfahren zur Ermittlung der Drehzahl und/oder von Motorparametern eines mit einem Frequenzumrichter betriebenen Drehstromantriebs.

Für eine hochdynamische Regelung elektrischer Antriebe werden in vielen Bereichen der industriellen Antriebstechnik frequenzumrichtergespeiste Drehstromantriebe eingesetzt. Das Grundprinzip dieser Antriebe ist, dass drehmomentbildende und flussbildende Größen getrennt voneinander geregelt werden können. Um dies zu erreichen, ist eine genaue Information über die Rotorlage oder die Drehzahl und/oder Motorparameter zwingend erforderlich. Die feldorientierte Regelung ist hier als ein bekanntestes Verfahren zu nennen, bei der auf die diese Information nicht verzichtet werden kann. Als Antriebstypen sind beispielsweise Synchron-, Synchronreluktanz- und Asynchronmaschinen zu nennen.

Aus dem Stand der Technik ist gemäß der EP 3 723 273 B1 ein Verfahren zur Ermittlung der Rotorlage eines mit einem Frequenzumrichter betriebenen Drehstromantriebs mit folgenden Schritten bekannt:

a) Bereitstellen von Motorströmen in Statorkoordinaten ($i_\alpha$, $i_\beta$) als erste Eingangsgröße einer ersten Recheneinheit (11),

b) Ermitteln von Motorsollwertspannungen in Statorkoordinaten aus einer aktuellen Zwischenkreisspannung des Frequenzumrichters und PWM-Signalen ($S_1$ - $S_6$) sowie Bereitstellen der Motorsollwertspannungen in Statorkoordinaten als zweite Eingangsgröße der ersten Recheneinheit (11) und

c) Berechnung der Rotorlage ($\varphi$) in Statorkoordinaten, wobei

- ausgehend von der allgemeinen Spannungsgleichung

$$\underline{u}_s^s = R_s \cdot \underline{i}_s^s + L_s \cdot \frac{d\underline{i}_s^s}{dt} + \omega \cdot \underline{\psi}_s^s$$

der Drehfeldmaschine in Raumzeigerdarstellung eine Aufteilung in die beiden Spannungs-Raumzeigerkomponenten

$$u_\alpha^s = R_s \cdot i_\alpha^s + L_0 \cdot \frac{di_\alpha^s}{dt} + L_1 \cdot \left( \frac{di_\alpha^s}{dt} \cdot \cos 2\varphi + \frac{di_\beta^s}{dt} \cdot \sin 2\varphi \right) + L_{dq} \cdot \left( \frac{di_\beta^s}{dt} \cdot \cos 2\varphi - \frac{di_\alpha^s}{dt} \cdot \sin 2\varphi \right)$$
$$- \omega \cdot \psi_\beta^s - \omega \cdot L_{dq} \cdot \left( i_\alpha^s \cdot \cos 2\varphi + i_\beta^s \cdot \sin 2\varphi \right) + \omega \cdot L_1 \cdot \left( i_\beta^s \cdot \cos 2\varphi - i_\alpha^s \cdot \sin 2\varphi \right)$$
$$+ \omega \cdot L_0 \cdot i_\beta^s$$

$$u_\beta^s = R_s \cdot i_\beta^s + L_0 \cdot \frac{di_\beta^s}{dt} - L_1 \cdot \left( \frac{di_\beta^s}{dt} \cdot \cos 2\varphi - \frac{di_\alpha^s}{dt} \cdot \sin 2\varphi \right) + L_{dq} \cdot \left( \frac{di_\alpha^s}{dt} \cdot \cos 2\varphi + \frac{di_\beta^s}{dt} \cdot \sin 2\varphi \right)$$
$$+ \omega \cdot \psi_\alpha^s + \omega \cdot L_{dq} \cdot \left( i_\beta^s \cdot \cos 2\varphi - i_\alpha^s \cdot \sin 2\varphi \right) + \omega \cdot L_1 \cdot \left( i_\alpha^s \cdot \cos 2\varphi + i_\beta^s \cdot \sin 2\varphi \right)$$
$$- \omega \cdot L_0 \cdot i_\alpha^s$$

vorgenommen wird,

- die Spannungssollwert-Raumzeiger ($u_\alpha^s$, $u_\beta^s$) und die Stromistwert-Raumzeiger ($i_\alpha$, $i_\beta$) in ein lineares System mit komplexwertigen Ein- und Ausgangsgrößen überführt werden und
- unter Verwendung der Eingangsgrößen der ersten Rechnereinheit (11) die Rotorlage ($\varphi$) als Ausgansgröße dieses Systems mittels einer linearen Regressionsanalyse bestimmt wird.

Eine weitere Möglichkeit, die Information über die Rotorlage zu erhalten, besteht darin, die Maschine mit einem Lagegeber auszustatten. Diese Maßnahme führt allerdings dazu, dass die Kosten der Maschine steigen. Zusätzlich erhöht sich die Ausfallwahrscheinlichkeit, da beispielsweise aufgrund von Störeinflüssen das Gebersignal verfälscht werden kann. Im schlimmsten Fall kann das Gebersignal vollständig unbrauchbar sein, beispielsweise bei einem Kabelbruch.

Aus diesem Grund werden häufig die sogenannten "geberlosen" Verfahren eingesetzt. Bei diesen Verfahren wird der Motor als Sensor genutzt, um die Rotorlage aus den zur Verfügung stehenden elektrischen Signalen zu ermitteln. Geberlose Verfahren, die dabei lediglich auf einem Grundwellenmodell der Maschine beruhen, versagen bei Drehzahl Null. Bei kleinen Drehzahlen sind sie zudem ungenau und können zur Instabilität des Antriebs führen. Aus diesem Grund gibt es eine Vielzahl von alternativen Verfahren, bei denen eine Anisotropie des Motors ausgenutzt wird, um die Rotorlage des Motors bis einschließlich Drehzahl Null zu ermitteln.

Die Ursachen einer Anisotropie können hauptsächlich durch zwei physikalische Effekte erklärt werden. Zum einen bewirkt eine asymmetrische Läuferstruktur, dass die Permeabilität des Eisenmaterials räumlich unterschiedlich ausgeprägt ist. Das führt dazu, dass die Ständerinduktivität des Motors eine Rotorlageabhängigkeit besitzt. Zum anderen kann eine Anisotropie durch den Magnetisierungszustand des Motors entstehen. Diese Ausprägung ist dann durch die Sättigung des Eisenmaterials begründet und führt ebenfalls zu einer rotorlageabhängigen Ständerinduktivität.

Unter Berücksichtigung anisotropischer Eigenschaften sind aus dem Stand der Technik ferner Verfahren zur Ermittlung von Motorparametern bekannt Diese können in unterschiedliche Kategorien eingeteilt werden.

Es sind beispielsweise Verfahren bekannt, bei denen ein hochfrequentes Testsignal in den Motor eingeprägt wird. Dieses Testsignal kann dabei als alternierender oder rotierender Raumzeiger ausgeführt sein. Durch die Demodulation des hochfrequenten Signals können Motorparameter extrahiert werden. Ein solches Verfahren offenbart beispielsweise die DE 10 2017 221 610 A1. Dabei betrifft die DE 10 2017 221 610 A1 ein Verfahren zum feldorientierten Betrieb einer stromrichtergespeisten, permanenterregten Synchronmaschine, wobei mittels eines einem Sollstrom-Raumzeiger überlagerten Testsignals ein geschätzter Polradlagewinkel und eine geschätzte Läuferkreisfrequenz fortlaufend korrigiert werden.

Die Verfahren dieser Kategorie haben den Nachteil, dass das Testsignal in der Regel kontinuierlich eingeprägt wird, was zu einer erheblichen Geräuschbelastung führen kann und die Verluste des Motors erhöht.

Es sind auch Verfahren bekannt, die ohne Anspruch auf ein bestimmtes Anregungsmuster arbeiten. Beispielsweise kann die durch eine vorhandene Strom- und Drehzahlregelung vorhandene Anregung des Motors direkt genutzt werden. Daher ist unter bestimmten Voraussetzungen eine Adaption von Motorparametern auch ohne zusätzliche Einprägung von Testsignalen möglich. Ein solches Verfahren offenbart beispielsweise die DE 10 2011 112 647 A1.

Ein weiteres Unterscheidungsmerkmal der Verfahren zur Ermittlung von Motorparametern ist die Art der Motorstrommessung. Bei vielen Anwendungen wird lediglich der Mittelwert des Stromes über eine Schaltperiode benötigt. Da die Mittelwertbildung allerdings aufwändig und teuer ist, wird meistens eine zur Pulsweitenmodulation synchrone Stromabtastung verwendet. Unter der Annahme, dass der Strom sich innerhalb einer Schaltperiode linear ändert, kann so die Grundschwingung des Motorstromes erfasst werden. Dabei sind maximal zwei Messungen pro Schaltperiode möglich.

Es ist allerdings vorteilhaft, mehr Informationen über den elektrischen Zustand innerhalb einer Schaltperiode zu erhalten. Dazu kann ein Verfahren der Stromüberabtastung genutzt werden, wie es beispielsweise mit der EP 3 054 583 A1 beschrieben ist. Stromabtastungen mit bis zu 20MHz sind aus der industriellen Praxis bekannt.

Ein letztes Unterscheidungsmerkmal der verschiedenen Verfahren zu Ermittlung von Drehzahl und/oder Motorparametern ist das Bezugssystem, in dem ein Berechnung durchgeführt wird. Hier besteht die Möglichkeit die Berechnung in Feldkoordinaten (so zum Beispiel gemäß der EP 3 054 583 A1) oder altemativ in Statorkoordinaten (so zum Bespiel gemäß der WO 2017/045810 A1) durchzuführen.

Die zur Bestimmung der Drehzahl und/oder von Motorparametern voraufgeführten Verfahren haben allesamt die Gemeinsamkeit, dass die sogenannte Raumzeigerdarstellung als Grundlage für eine Beschreibung benutzt wird. Diese Darstellungsform ermöglicht die Betrachtung eines Dreiphasensystems in einem einfacher zu behandelnden Zweiphasensystem. Die Raumzeigerdarstellung erhält man dabei durch die Anwendung der sogenannten Clarke-Transformation.

Nachteilig an diesen bekannten Verfahren ist, dass eine Auftrennung in die beiden Raumzeigerkomponenten durchzuführen ist, um Berechnungen zu ermöglichen. Eine durchgängig geschlossene Lösung, d.h. eine Bestimmung der Drehzahl und/oder von Motorparametern über sämtliche Drehzahlbereiche ist in der Raumzeigerdarstellung allerdings nicht möglich.

Zusammenfasend ergibt sich, dass zur Bestimmung der Drehzahl und/oder von Motorparametern unterschiedliche Verfahren bekannt sind. Dabei ist diesen Verfahren gemein, dass sie nur für einen bestimmten Drehzahlbereich verlässliche Werte liefern. So findet insbesondere in einem vergleichsweise hohen Drehzahlbereich typischerweise das sog. EMK-Verfahren Verwendung. Dieses Verfahren versagt aber im unteren Drehzahlbereich nahe Null, weil mangels Rotordrehzahl die zur Verfahrensdurchführungen notwendigen Eingangsparameter fehlen. Dies kann in umständlicher Weise dadurch ausgeglichen werden, dass Testsignale eingesetzt werden oder dass die Bestimmung der Drehzahl und/oder von Motorparametern in Abhängigkeit bekannter Betriebspunkte und/oder Motoreigenschaften erfolgt.

Es ist deshalb die **Aufgabe** der Erfindung, ein Verfahren zur Ermittlung der Drehzahl und/oder von Motorparametern einer mit einem Frequenzumrichter betriebenen Drehfeldmaschine anzugeben, das über den gesamten Drehzahlbereich zuverlässige Ergebnisse liefert.

Zur **Lösung** dieser Aufgabe wird mit der Erfindung vorgeschlagen ein Verfahren zur Ermittlung der Drehzahl und/oder von Motorparametem eines mit einem Frequenzumrichter betriebenen Drehstromantriebs, das sich auszeichnet durch die Merkmale nach Anspruch 1. Merkmale von vorteilhaften Ausgestaltungen der Erfindung sind in den weiteren Ansprüchen angegeben.

Motorparameter im Sinne der Erfindung, d.h. mittels einer erfindungsgemäßen Verfahrensdurchführung ermittelbare Motorparameter sind insbesondere

- die Sekanteninduktivitäten $L_d$ und $L_q$, wobei die Größe dieser Induktivitäten vom Grundschwingungsstrom abhängig ist,
- die Querinduktivität $L_{dq}$, wobei diese sogenannte Koppelinduktivität aufgrund von Kreuzättigungen der Magnetachsen ensteht,
- die Tangenteninduktivitäten $L_{dd}$ und $L_{qq}$, die sich aus partiellen Ableitungen der magnetischen Flussgleichungen ergeben,
- der Polradfluss, der durch die Magnete der permanentmagneterregten Synchronmaschine entsteht und
- der Motorwiderstand

Mit der erfindungsgemäßen Verfahrensdurchführung ist unter anderem vorgesehen, dass die Raumzeigerkomponenten in ein nichtlineares System mit komplexwertigen Ein- und Ausgangsgrößen überführt werden. Damit macht sich die erfindungsgemäße Verfahrensdurchführung zunutze, dass durch die Überführung in ein nichtlineares System mit komplexwertigen Ein- und Ausgangsgrößen eine Gleichung entsteht, die als solche lösbar ist, und zwar ohne Vernachlässigung einzelner Gleichungsterme. Im Ergebnis steht in vorteilhafter Weise, dass zu sämtlichen Gleichungstermen anhand der zuvor bereitgestellten Eingangsgrößen Ausgangsgrößen ermittelt werden können.

Es ist also vermieden, vor einer Bestimmung von wünschenswerter Weise zu erhaltenden Ausgangsgrößen einzelne Gleichungsterme zwecks Erzeugung einer lösbaren Gleichung zu vernachlässigen. Es ist vielmehr vorgesehen, eine Gleichung zu erzeugen, die bezüglich aller Terme lösbar ist, so dass erst hinsichtlich infolge einer Berechnung erhaltene Ergebnisse eine Verwerfung oder Vernachlässigung stattfindet. Es ist so ein geschlossenes System geschaffen, das es ermöglicht, über den gesamten Drehzahlbereich eine zuverlässige Ermittlung der Drehzahl und/oder von Motorparametern zu ermöglichen.

Im Ergebnis der Verfahrensdurchführung steht, dass es zur Ermittlung der Drehzahl und/oder von Motorparametern weder Testsignale bedarf, noch irgendwelche Betriebspunkte oder Eigenschaften des Motors mit zu berücksichtigen sind. Es ist allein ausreichend, Strom- und Spannungswerte vorzugeben.

Ausgangspunkt für die Verfahrensdurchführung ist die allgemeine Spannungsgleichung eines Drehstromantriebs in Raumzeigerdarstellung, die sich wie folgt darstellt.

$$\underline{u}_s^s = R_s \cdot \underline{i}_s^s + L_s \cdot \frac{d\underline{i}_s^s}{dt} + \omega \cdot \underline{\psi}_s^s$$

Unter Berücksichtigung einer Anisotropie ergibt sich hieraus

$$\underline{u}_s^s = R_s \cdot \underline{i}_s^s + \begin{bmatrix} L_{\alpha\alpha} & L_{\alpha\beta} \\ L_{\beta\alpha} & L_{\beta\beta} \end{bmatrix} \cdot \frac{d\underline{i}_s^s}{dt} + \begin{bmatrix} 0 & -1 \\ 1 & 0 \end{bmatrix} \cdot \omega \cdot \underline{\psi}_s^s - \begin{bmatrix} L_{\alpha\alpha} & L_{\alpha\beta} \\ L_{\beta\alpha} & L_{\beta\beta} \end{bmatrix} \cdot \begin{bmatrix} 0 & -1 \\ 1 & 0 \end{bmatrix} \cdot \omega \cdot \frac{d\underline{i}_s^s}{dt}$$

mit

$$L_{\alpha\alpha} = L_{dd} \cdot \cos^2 \varphi + L_{qq} \cdot \sin^2 \varphi - 2 \cdot L_{dq} \cdot \sin\varphi \cdot \cos\varphi$$

$$L_{\beta\beta} = L_{dd} \cdot \sin^2 \varphi + L_{qq} \cdot \cos^2 \varphi + 2 \cdot L_{dq} \cdot \sin\varphi \cdot \cos\varphi$$

$$L_{\alpha\beta} = \left(L_{dd} - L_{qq}\right) \cdot \sin\varphi \cdot \cos\varphi + L_{dq} \cdot \left(\cos^2\varphi - \sin^2\varphi\right) = L_{\beta\alpha}$$

Für die beiden Raumzeigerkomponenten ergibt sich damit

$$u_\alpha^s = R_s \cdot i_\alpha^s + L_{\alpha\alpha} \cdot \frac{di_\alpha^s}{dt} + L_{\alpha\beta} \cdot \frac{di_\beta^s}{dt} - \omega \cdot \psi_\beta^s - L_{\alpha\beta} \cdot \omega \cdot i_\alpha^s + L_{\alpha\alpha} \cdot \omega \cdot i_\beta^s$$

$$u_\beta^s = R_s \cdot i_\beta^s + L_{\beta\beta} \cdot \frac{di_\beta^s}{dt} + L_{\beta\alpha} \cdot \frac{di_\alpha^s}{dt} + \omega \cdot \psi_\alpha^s + L_{\beta\alpha} \cdot \omega \cdot i_\beta^s - L_{\beta\beta} \cdot \omega \cdot i_\alpha^s$$

wobei

$$L_{\alpha\alpha} = L_0 + L_1 \cdot \cos 2\varphi - L_{dq} \cdot \sin 2\varphi$$

$$L_{\beta\beta} = L_0 - L_1 \cdot \cos 2\varphi + L_{dq} \cdot \sin 2\varphi$$

$$L_{\alpha\beta} = L_1 \cdot \sin 2\varphi + L_{dq} \cdot \cos 2\varphi = L_{\beta\alpha}$$

mit

$$L_0 = \frac{L_{dd} + L_{qq}}{2}$$

und

$$L_1 = \frac{L_{dd} - L_{qq}}{2}$$

so dass sich ergibt

$$u_\alpha^s = R_s \cdot i_\alpha^s + L_0 \cdot \frac{di_\alpha^s}{dt} + L_1 \cdot \left(\frac{di_\alpha^s}{dt} \cdot \cos 2\varphi + \frac{di_\beta^s}{dt} \cdot \sin 2\varphi\right) + L_{dq} \cdot \left(\frac{di_\beta^s}{dt} \cdot \cos 2\varphi - \frac{di_\alpha^s}{dt} \cdot \sin 2\varphi\right)$$

$$- \omega \cdot \psi_\beta^s - \omega \cdot L_{dq} \cdot \left(i_\alpha^s \cdot \cos 2\varphi + i_\beta^s \cdot \sin 2\varphi\right) + \omega \cdot L_1 \cdot \left(i_\beta^s \cdot \cos 2\varphi - i_\alpha^s \cdot \sin 2\varphi\right)$$

$$+ \omega \cdot L_0 \cdot i_\beta^s$$

$$u_\beta^s = R_s \cdot i_\beta^s + L_0 \cdot \frac{di_\beta^s}{dt} - L_1 \cdot \left(\frac{di_\beta^s}{dt} \cdot \cos 2\varphi - \frac{di_\alpha^s}{dt} \cdot \sin 2\varphi\right) + L_{dq} \cdot \left(\frac{di_\alpha^s}{dt} \cdot \cos 2\varphi + \frac{di_\beta^s}{dt} \cdot \sin 2\varphi\right)$$

$$+ \omega \cdot \psi_\alpha^s + \omega \cdot L_{dq} \cdot \left(i_\beta^s \cdot \cos 2\varphi - i_\alpha^s \cdot \sin 2\varphi\right) + \omega \cdot L_1 \cdot \left(i_\alpha^s \cdot \cos 2\varphi + i_\beta^s \cdot \sin 2\varphi\right)$$

$$- \omega \cdot L_0 \cdot i_\alpha^s$$

Die so ermittelten Raumzeigerkomponenten, d.h. die Spannungssollwert-Raumzeiger ( $u_\alpha^s, u_\beta^s$ ) und die Stromistwert-Raumzeiger ($i_\alpha$, $i_\beta$) werden nun in Abkehr zur eingangs genannten EP 3 723 273 B1 in ein nichtlineares System mit komplexwertigen Ein- und Ausgangsgrößen überführt.

$$\underline{u}_{\alpha\beta} = L_d \cdot \left( \frac{1}{2}\left( \frac{di_\alpha}{dt} + j\frac{di_\beta}{dt} \right) + \left( \frac{1}{2}\left( \frac{di_\alpha}{dt} - j\frac{di_\beta}{dt} \right) + j\omega\left( i_\alpha - ji_\beta \right) \right) \cdot e^{j2\omega t} \cdot e^{j2\varphi_0} \right)$$

$$+ L_q \cdot \left( \frac{1}{2}\left( \frac{di_\alpha}{dt} + j\frac{di_\beta}{dt} \right) - \left( \frac{1}{2}\left( \frac{di_\alpha}{dt} - j\frac{di_\beta}{dt} \right) + j\omega\left( i_\alpha - ji_\beta \right) \right) \cdot e^{j2\omega t} \cdot e^{j2\varphi_0} \right)$$

$$+ L_{dq} \cdot \left( j\left( \frac{di_\alpha}{dt} - j\frac{di_\beta}{dt} \right) - \omega\left( i_\alpha - ji_\beta \right) \right) \cdot e^{j2\omega t} \cdot e^{j2\varphi_0}$$

$$+ \frac{\partial L_d}{\partial i_d} \cdot i_d \cdot \frac{1}{2}\left( \left( \frac{di_\alpha}{dt} + j\frac{di_\beta}{dt} \right) - j\omega\left( i_\alpha + ji_\beta \right) + \left( \left( \frac{di_\alpha}{dt} - j\frac{di_\beta}{dt} \right) + j\omega\left( i_\alpha - ji_\beta \right) \right) \cdot e^{j2\omega t} \cdot e^{j2\varphi_0} \right)$$

$$+ \frac{\partial L_q}{\partial i_q} \cdot i_q \cdot \frac{1}{2}\left( \left( \frac{di_\alpha}{dt} + j\frac{di_\beta}{dt} \right) - j\omega\left( i_\alpha + ji_\beta \right) - \left( \left( \frac{di_\alpha}{dt} - j\frac{di_\beta}{dt} \right) + j\omega\left( i_\alpha - ji_\beta \right) \right) \cdot e^{j2\omega t} \cdot e^{j2\varphi_0} \right)$$

$$+ \Psi_p \cdot j\omega \cdot e^{j\omega t} \cdot e^{j\varphi_0}$$

$$+ R \cdot \left( i_\alpha + ji_\beta \right)$$

Dies erbringt den Vorteil eines Systems mit Koeffizienten, die durch komplexe Zahlen beschrieben sind, was eine geschlossene Lösung mittels beispielweise einer nichtlinearen Regressionsanalyse ermöglicht. Motorparameter, die Drehzahl und auch die Lage können mit Hilfe eines geeigneten Verfahrens ermittelt werden. Die Lage ist implizit in der komplexwertigen Exponentialfunktion enthalten. Drehzahl und Motorparameter sind multiplikativ miteinander sowie mit der Exponentialfunktion der Lageabhängigkeit verknüpft. Daher handelt es sich um ein nichtlineares System

Als Eingangsgrößen für das Verfahren dienen in das statorfeste Koordinatensystem transformierte Motorsollwertspannungen und ebenfalls in das statorfeste Koordinatensystem transformierte Motorströme. Dabei werden die Motorsollwertspannungen auf Basis der aktuell am Frequenzumrichter anliegenden Zwischenkreisspannung sowie den PWM-Signalen bestimmt. Die Motorströme stehen vorzugsweise als überabgetastete Signale zur Verfügung. Dabei können abhängig von der eingesetzten Hardware Abtastraten von bis 1MHz vorgesehen sein. Allgemein liegt indes eine Überabtastung vor, wenn der Strom häufiger als zweimal pro Schaltperiode abgetastet wird. Bei einer Schaltfrequenz von 8kHz entspricht das 125 Messwerten pro Schaltperiode. Die Messdaten werden verzögerungsfrei verarbeitet, so dass die aus den Berechnungen ermittelte Rotorlage für eine hochdynamische Regelung des Drehstrommotors genutzt werden kann. Zu diesem Zweck ist es bevorzugt, die Berechnungen auf einen FPGA auszulagern.

Die folgende Kategorisierung lässt sich für das erfindungsmäßige Verfahren angeben.

- Beliebige Testsignale

- Überabtastende Strommessung mit doppelter Schaltfrequenz bis 100 MHz, vorzugsweise mit 32 kHz bis 20 MHz, noch mehr bevorzugt mit 200 kHz bis 4 MHz, am meisten bevorzugt mit beispielsweise 1MHz. Es sind auch andere Abtastraten möglich. Es ist lediglich erforderlich, dass der Motor über die PWM-Signale angeregt wird und dass diese Anregung durch die Strommessung erfasst wird.

- Bestimmung der Drehzahl und von Motorparametern in Statorkoordinaten

In Folge der nach dem Verfahren vorgesehenen Überführung der Raumzeigerkomponenten in ein nichtlineares System mit komplexwertigen Ein- und Ausgangsgrößen ergeben sich Terme, die multiplikativ mit der Drehzahl verknüpft sind. Somit handelt es sich um ein nichtlineares System bezüglich der zu ermittelnden Drehzahl sowie der zu ermittelnden Motorparameter.

$$\hat{u}_{\alpha\beta} = \begin{pmatrix} L_d \\ L_q \\ L_{dq} \\ L_{dd} \\ L_{qq} \\ \Psi_p \\ R \end{pmatrix}^T \cdot \begin{pmatrix} f\left(\dfrac{di_{\alpha\beta}}{dt}, \dfrac{di_{\alpha\beta}^*}{dt}, i_{\alpha\beta}^*, \omega, \varphi\right) \\ f\left(\dfrac{di_{\alpha\beta}}{dt}, \dfrac{di_{\alpha\beta}^*}{dt}, i_{\alpha\beta}^*, \omega, \varphi\right) \\ f\left(\dfrac{di_{\alpha\beta}^*}{dt}, i_{\alpha\beta}^*, \omega, \varphi\right) \\ f\left(\dfrac{di_{\alpha\beta}}{dt}, \dfrac{di_{\alpha\beta}^*}{dt}, i_{\alpha\beta}, i_{\alpha\beta}^*, \omega, \varphi\right) \\ f\left(\dfrac{di_{\alpha\beta}}{dt}, \dfrac{di_{\alpha\beta}^*}{dt}, i_{\alpha\beta}, i_{\alpha\beta}^*, \omega, \varphi\right) \\ f(\omega, \varphi) \\ f\left(i_{\alpha\beta}\right) \end{pmatrix} = W^T \cdot X$$

Die vorstehende Gleichung zeigt die Struktur des vorgeschlagenen komplexwertigen Motormodells. Das Ziel besteht darin, ein Modell zu erstellen, das eine Beziehung *f* zwischen den reel- und komplexwertigen Eingängen und dem komplexwertigen geschätzten Ausgang herstellt. Der hochgestellte Stern kennzeichnet eine komplexe Konjugation.

Sättigungseffekte des Motors werden dabei durch differentielle Eigeninduktivitäten ($L_{dd}$, $L_{qq}$) und Querinduktivitäten ($L_{dq}$) berücksichtigt. Für die Ermittlung von Motorparametern, Drehzahl und auch Lage wird erfindungsgemäß ein geeignetes rekursives Verfahren zur Parameter- und Zustandschätzung von Systemen als Ausgangsbasis genutzt.

Gemäß einem weiteren Merkmal der Erfindung wird als eine nichtlineare Regressionsanalyse das "least-mean-squares"-Verfahren als Suchalgorithmus verwendet, welches auf einem stochastischen Gradientenverfahren basiert. Es vereinfacht den sogenannten "steepest-descent"-Algorithmus, indem es die Erwartungen der Korrelations- und Kreuzkorrelationsmatrix durch augenblickliche Schätzungen ersetzt. Diese Näherung führt zu den folgenden allgemeinen Gleichungen. Die drei für einen Iterationsschritt erforderlichen Berechnungen können als "Filterung", "Fehlerschätzung" und "Adaption Paramervektor" bezeichnet werden.

$$\begin{aligned} y(n) &= w^T(n) \cdot x(n) \\ e(n) &= d(n) - y(n) \end{aligned} \Bigg\} \quad w(n+1) = w(n) + 2\mu \cdot e(n) \cdot x(n)$$

Der Algorithmus ist für die Verwendung mit reelwertigen Parametern und Signalen vorgesehen. Daher muss der Algorithmus modifiziert werden, um ihn für das vorgeschlagene komplexwertige Motormodell anwendbar zu machen. Zusätzlich muss der Algorithmus aufgrund des nichlinearen Charakters der Motorgleichung angepasst werden. Dies wird durch das Hinzufügen von partiellen Ableitung der komplexwertigen Ausgangsspannung erreicht.

$$\begin{aligned} \hat{u}_{\alpha\beta}(n) &= \hat{W}^T(n) \cdot X(n) \\ e(n) &= u_{\alpha\beta}(n) - \hat{u}_{\alpha\beta}(n) \end{aligned} \Bigg\} \quad \begin{pmatrix} W(n+1) \\ \varphi(n+1) \\ \omega(n+1) \end{pmatrix} = \begin{pmatrix} W(n) \\ \varphi(n) \\ \omega(n) \end{pmatrix} + 2 \cdot \mu \cdot e(n) \cdot \begin{pmatrix} X^*(n) \\ \dfrac{d\hat{u}_{\alpha\beta}}{d\hat{\varphi}} \\ \dfrac{d\hat{u}_{\alpha\beta}^*}{d\hat{\omega}} \end{pmatrix}$$

Ein besonderer Vorteil des "Least-Mean-Squares"-Verfahrens im Vergleich zu anderen Regressionsalgorithmen ist der geringe Rechenaufwand für die einzelnen Iterationsschritte.

Gemäß einem weiteren Merkmal der Erfindung kann anstelle des "Least-Mean-Squares"-Verfahrens alternativ auch ein "Erweiterter-Kalman-Filter"-Algorithmus zur Berechnung genutzt werden. Der Rechenaufwand ist allerdings höher, so dass eine Echtzeitberechnung schwerer zu realisieren ist und entsprechende Hardware voraussetzt, was die Anwendung vergleichsweise teuer macht.

Die nach der Erfindung als geeignetes rekursiven Verfahren vorgesehene Regressionsanalyse basiert aus den schon erläuterten Gründen vorzugsweise auf einem nichtlinearen, komplexwertigen Least-Mean-Square-Algorithmus, der die Ermittlung von Lage, Drehzahl und elektrischen Motorparametern in Echtzeit ermöglicht. Dabei wird die Drehzahl erfindungsgemäß nicht durch Differenzieren der Rotorlage ermittelt. Die Rotorlage und die Drehzahl werden vielmehr unabhängig voneinander adaptiert, so dass sich der Zusammenhang zwischen Rotorlage und Drehzahl nur indirekt ergibt.

Basierend auf einer Echtzeitberechnung der Motorparameter kann gemäß einem weiteren Merkmal der Erfindung außerdem eine Echtzeit-Max-Torque-Per-Ampere (MTPA) Regelung erfolgen. Diese wird durch einen gradientbasierten Suchalgorithmus ermöglicht.

Eine Echtzeit-MTPA-Regelung erfolgt mit dem Ziel, den Motorscheinstrom für einen gegebenen Drehmomentsollwert zu minimieren. Ausgangspunkt für die Herleitung ist die folgende Gleichung.

$$\widehat{M} = f\big(I_d, I_q, L_d, L_q, \Psi_p, z_p\big)$$

Diese Gleichung stellt eine Beziehung f zwischen Signalen und Parametern, die für die Berechnung des Motordrehmoments benötigt werden, und dem Motordrehmoment her. Die Ableitungen dieser Gleichung bezüglich der aktuellen Stromkomponente im feldsynchronen Bezugssystems berechnet sich wie folgt.

$$\frac{\partial \widehat{M}_d}{\partial I_d} = f\big(I_d, I_q, L_d, L_q, L_{dq}, L_{dd}, z_p\big)$$

$$\frac{\partial \widehat{M}_q}{\partial I_q} = f\big(I_d, I_q, L_d, L_q, L_{dq}, L_{qq}, \Psi_p, z_p\big)$$

Diese beiden vorstehenden Gleichungen müssen zur Minimierung des Scheinstroms umgestellt werden zu

$$\frac{\partial \widehat{M}_d}{\partial I} = \frac{\partial \widehat{M}_d}{\partial I_d} \cdot \frac{\partial I_d}{\partial I} = \frac{\partial \widehat{M}_d}{\partial I_d} \cdot \frac{\sqrt{I_d^2 + I_q^2}}{I_d}$$

$$\frac{\partial \widehat{M}_q}{\partial I} = \frac{\partial \widehat{M}_q}{\partial I_q} \cdot \frac{\partial I_q}{\partial I} = \frac{\partial \widehat{M}_q}{\partial I_q} \cdot \frac{\sqrt{I_d^2 + I_q^2}}{I_q}$$

Der Quotient dieser beiden Gleichungen ergibt

$$\frac{\dfrac{\partial \widehat{M}_d}{\partial I}}{\dfrac{\partial \widehat{M}_q}{\partial I}} = \frac{\dfrac{\partial \widehat{M}_d}{\partial I_d} \cdot I_q}{\dfrac{\partial \widehat{M}_q}{\partial I_q} \cdot I_d}$$

Werte größer als eins zeigen an, dass eine Erhöhung des Blindstroms $I_d$ den Scheinstrom für ein gegebenes Motordrehmoment verringern würden. Werte kleiner als eins würden den Scheinstrom erhöhen. Diese Information kann daher für einen Adaptionsalgorithmus verwendet werden.

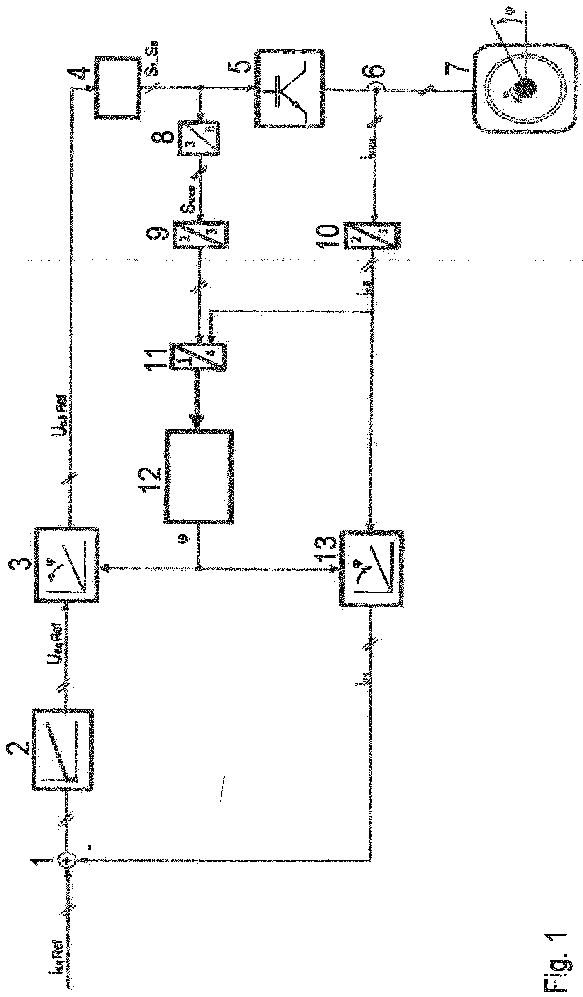

Weitere Merkmale und Vorteile ergeben sich aus der nachfolgenden Beschreibung anhand der einzigen Figur 1, die in rein schematischer Darstellung eine Stromregelung zeigt.

Figur 1 zeigt schematisch in einem Schaltdiagramm eine geberlose, feldorientierte Stromregelung. Der überlagerte Drehzahlregelkreis und der gegebenenfalls vorhandene Lageregelkreis sind hier der besseren Übersicht wegen nicht dargestellt.

Die für eine feldorientierte Regelung benötigten Stromistwerte werden auf der Leistungsebene mit Hilfe von Stromsensoren 6 an einer Drehfeldmaschine 7 messtechnisch erfasst. Diese Ströme werden auf der Signalebene mit einem dritten Koordinatenwandler 10 gewandelt, sodass Stromistwert-Raumzeiger im Ständerkoordinatensystem zur Verfügung stehen. Ein dem dritten Koordinatenwandler 10 nachgeschalteter Koordinatendreher dient als zweiter Vektordreher 13 in das feldorientierte Koordinatensystem. Die so erhaltenen Stromistwert-Raumzeiger in Feldkoordinaten werden mit den von einem überlagerten Drehzahlregler zur Verfügung gestellten Stromsollwert-Raumzeigern in einen Addierer 1 geführt. Der Stromistwert-Raumzeiger wird dazu zunächst invertiert. Die so erhaltene Differenz zwischen Stromsollwert-Raumzeiger und Stromistwert-Raumzeiger wird einer Regeleinrichtung 2 zugeführt. Am Ausgang dieser Regeleinrichtung 2 liegt ein Spannungssollwert-Raumzeiger in Feldkoordinaten vor, der mit dem ersten Vektordreher 3 in das Ständerkoordinatensystem gedreht wird. Ein Pulsweitenmodulator 4 berechnet aus diesem Spannungssollwert-Raumzeiger schließlich die Ansteuersignale für die Leistungshalbleiter im Stellglied 5.

Die vom Pulsweitenmodulator 4 zur Verfügung gestellten sechs Ansteuersignale werden mit Hilfe des ersten Koordinatenwandlers 8 und der Berücksichtigung der aktuellen Zwischenkreisspannung des Frequenzumrichters in ein dreiphasiges Spannungssystem transformiert. Diesem ersten Koordinatenwandler 8 ist ein zweiter Koordinatenwandler 9 nachgeschaltet, der die Transformation dieses Dreiphasenspannungssystems in die Raumzeigerdarstellung in Ständerkoordinaten überführt.

In einer ersten Recheneinheit 11 werden die Spannungssollwert-Raumzeiger aus dem zweiten Koordinatenwandler 9 und die Stromistwert-Raumzeiger aus dem dritten Koordinatenwandler 10 alsdann in ein lineares System mit komplexwertigen Ein- und Ausgangsgrößen überführt.

In einer zweiten Recheneinheit 12 werden sodann die Drehzahl und Motorparameter wie zum Beispiel die Sekanteninduktivitäten $L_d$ und $L_q$., die Querinduktivität $L_{dq}$, die Tangenteninduktivitäten $L_{dd}$ und $L_{qq}$, der Polradfluss und/oder der Motorwiderstand mittels einer nichtlinearen Regressionsanalyse bestimmt. Ferne wird die Rotorlage bestimmt. Diese wird bei der feldorientierten Regelung benötigt, um die Vektordrehung von Feldkoordinaten in Ständerkoordinaten im ersten Vektordreher 3 durchzuführen. Ebenso wird diese Rotorlage benötigt, um die Vektordrehung von Ständerkoordinaten in Feldkoordinaten im zweiten Vektordreher 13 durchzuführen.

Bezugszeichen

1 Addierer
2 Regeleinrichtung
3 erster Vektordreher
4 Pulsweitenmodulator
5 Stellglied
6 Stromsensor
7 Drehfeldmaschine
8 erster Koordinatenwandler
9 zweiter Koordinatenwandler
10 dritter Koordinatenwandler
11 erste Recheneinheit
12 zweite Recheneinheit
13 zweiter Vektordreher

**Patentansprüche**

1. Verfahren zur Ermittlung der Drehzahl und/oder von Motorparametern eines mit einem Frequenzumrichter betriebenen Drehstromantriebs mit folgenden Schritten:

a) Bereitstellen von Motorströmen in Statorkoordinaten ($i_\alpha$, $i_\beta$) als erste Eingangsgröße einer ersten Recheneinheit (11), wobei die Bereitstellung der Motorströme mittels einer überabtastenden Strommessung erfolgt,
b) Ermitteln von Motorsollwertspannungen in Statorkoordinaten aus einer aktuellen Zwischenkreisspannung des Frequenzumrichters und PWM-Signalen ($S_1$ - $S_6$) sowie Bereitstellen der Motorsollwertspannungen in Statorkoordinaten als zweite Eingangsgröße der ersten Recheneinheit (11),
c) Berechnung der Drehzahl und/oder von Motorparametern in Statorkoordinaten, wobei

- ausgehend von der allgemeinen Spannungsgleichung

$$\underline{u}_s^s = R_s \cdot \underline{i}_s^s + L_s \cdot \frac{d\underline{i}_s^s}{dt} + \omega \cdot \underline{\psi}_s^s$$

der Drehfeldmaschine in Raumzeigerdarstellung eine Aufteilung in die beiden Spannungs-Raumzeiger-komponenten

$$u_\alpha^s = R_s \cdot i_\alpha^s + L_0 \cdot \frac{di_\alpha^s}{dt} + L_1 \cdot \left( \frac{di_\alpha^s}{dt} \cdot \cos 2\varphi + \frac{di_\beta^s}{dt} \cdot \sin 2\varphi \right) + L_{dq} \cdot \left( \frac{di_\beta^s}{dt} \cdot \cos 2\varphi - \frac{di_\alpha^s}{dt} \cdot \sin 2\varphi \right)$$
$$- \omega \cdot \psi_\beta^s - \omega \cdot L_{dq} \cdot \left( i_\alpha^s \cdot \cos 2\varphi + i_\beta^s \cdot \sin 2\varphi \right) + \omega \cdot L_1 \cdot \left( i_\beta^s \cdot \cos 2\varphi - i_\alpha^s \cdot \sin 2\varphi \right)$$
$$+ \omega \cdot L_0 \cdot i_\beta^s$$

$$u_\beta^s = R_s \cdot i_\beta^s + L_0 \cdot \frac{di_\beta^s}{dt} - L_1 \cdot \left( \frac{di_\beta^s}{dt} \cdot \cos 2\varphi - \frac{di_\alpha^s}{dt} \cdot \sin 2\varphi \right) + L_{dq} \cdot \left( \frac{di_\alpha^s}{dt} \cdot \cos 2\varphi + \frac{di_\beta^s}{dt} \cdot \sin 2\varphi \right)$$
$$+ \omega \cdot \psi_\alpha^s + \omega \cdot L_{dq} \cdot \left( i_\beta^s \cdot \cos 2\varphi - i_\alpha^s \cdot \sin 2\varphi \right) + \omega \cdot L_1 \cdot \left( i_\alpha^s \cdot \cos 2\varphi + i_\beta^s \cdot \sin 2\varphi \right)$$
$$- \omega \cdot L_0 \cdot i_\alpha^s$$

vorgenommen wird, und

- unter Verwendung der Eingangsgrößen der ersten Rechnereinheit (11) die Drehzahl und/oder Motorparameter als Ausgansgröße(n) dieses Systems mittels eines geeigneten rekursiven Verfahrens bestimmt wird (werden),

das Verfahren ist **gekennzeichnet dadurch, dass**

- die Spannungssollwert-Raumzeiger ( $u_\alpha^s$, $u_\beta^s$ ) und die Stromistwert-Raumzeiger ($i_\alpha$, $i_\beta$) in ein nichtlineares System mit komplexwertigen Ein- und Ausgangsgrößen

$$\underline{u}_{\alpha\beta} = L_d \cdot \left( \frac{1}{2}\left(\frac{di_\alpha}{dt} + j\frac{di_\beta}{dt}\right) + \left(\frac{1}{2}\left(\frac{di_\alpha}{dt} - j\frac{di_\beta}{dt}\right) + j\omega\left(i_\alpha - ji_\beta\right)\right) \cdot e^{j2\omega t} \cdot e^{j2\varphi_0} \right)$$

$$+ L_q \cdot \left( \frac{1}{2}\left(\frac{di_\alpha}{dt} + j\frac{di_\beta}{dt}\right) - \left(\frac{1}{2}\left(\frac{di_\alpha}{dt} - j\frac{di_\beta}{dt}\right) + j\omega\left(i_\alpha - ji_\beta\right)\right) \cdot e^{j2\omega t} \cdot e^{j2\varphi_0} \right)$$

$$+ L_{dq} \cdot \left( j\left(\frac{di_\alpha}{dt} - j\frac{di_\beta}{dt}\right) - \omega\left(i_\alpha - ji_\beta\right) \right) \cdot e^{j2\omega t} \cdot e^{j2\varphi_0}$$

$$+ \frac{\partial L_d}{\partial i_d} \cdot i_d \cdot \frac{1}{2}\left( \left(\left(\frac{di_\alpha}{dt} + j\frac{di_\beta}{dt}\right) - j\omega\left(i_\alpha + ji_\beta\right) + \left(\left(\frac{di_\alpha}{dt} - j\frac{di_\beta}{dt}\right) + j\omega\left(i_\alpha - ji_\beta\right)\right) \cdot e^{j2\omega t} \right. \right.$$

$$\left. \cdot e^{j2\varphi_0} \right)$$

$$+ \frac{\partial L_q}{\partial i_q} \cdot i_q \cdot \frac{1}{2}\left( \left(\left(\frac{di_\alpha}{dt} + j\frac{di_\beta}{dt}\right) - j\omega\left(i_\alpha + ji_\beta\right) - \left(\left(\frac{di_\alpha}{dt} - j\frac{di_\beta}{dt}\right) + j\omega\left(i_\alpha - ji_\beta\right)\right) \cdot e^{j2\omega t} \right. \right.$$

$$\left. \cdot e^{j2\varphi_0} \right)$$

$$+ \Psi_p \cdot j\omega \cdot e^{j\omega t} \cdot e^{j\varphi_0}$$

$$+ R \cdot \left(i_\alpha + ji_\beta\right)$$

überführt werden.

2. Verfahren nach Anspruch 1, **dadurch gekennzeichnet, dass** die Drehzahl und/oder Motorparameter mittels einer nichtlinearen Regressionsanalyse bestimmt wird (werden).

3. Verfahren nach Anspruch 2, **dadurch gekennzeichnet, dass** die Drehzahl und/oder Motorparameter mittels eines nichtlinearen "least mean squares"-Verfahrens ermittelt wird (werden).

4. Verfahren nach Anspruch 2, **dadurch gekennzeichnet, dass** zur Bestimmung der Drehzahl und/oder von Motorparametern ein "erweiterter-Kalman-Filter"-Algorithmus genutzt wird.

5. Verfahren nach einem der vorhergehenden Ansprüche, **dadurch gekennzeichnet, dass** eine Echtzeit-Max-Torque-Per-Ampere (MTPA) Regelung durchgeführt wird.

6. Verfahren nach einem der vorhergehenden Ansprüche, **dadurch gekennzeichnet, dass** eine Drehzahl differenzierungsfrei ermittelt wird.

7. Verfahren nach Anspruch 6, **dadurch gekennzeichnet, dass** eine Drehzahl und eine Rotorlage unabhängig voneinander adaptiert werden.

**Claims**

1. Method for determining the rotational speed and/or motor parameters of a three-phase drive operated with a frequency converter, comprising the following steps:

    a) providing motor currents in stator coordinates ($i_\alpha$, $i_\beta$) as a first input variable of a first arithmetic unit (11), wherein the provision of the motor currents takes place by means of an oversampling current measurement,
    b) determining set value voltages of the motor in stator coordinates from a current intermediate circuit voltage of the frequency converter and PWM signals ($S_1$ - $S_6$) as well as providing the set value voltages of the motor in stator coordinates as a second input variable of the first arithmetic unit (11),
c) calculating the rotational speed and/or motor parameters in stator coordinates, wherein

- starting from the general voltage equation

$$\underline{u}_s^s = R_s \cdot \underline{i}_s^s + L_s \cdot \frac{d\underline{i}_s^s}{dt} + \omega \cdot \underline{\psi}_s^s$$

of the induction machine in space vector representation, a division into the voltage space vector components

$$u_\alpha^s = R_s \cdot i_\alpha^s + L_0 \cdot \frac{di_\alpha^s}{dt} + L_1 \cdot \left( \frac{di_\alpha^s}{dt} \cdot \cos 2\varphi + \frac{di_\beta^s}{dt} \cdot \sin 2\varphi \right) + L_{dq} \cdot \left( \frac{di_\beta^s}{dt} \cdot \cos 2\varphi - \frac{di_\alpha^s}{dt} \cdot \sin 2\varphi \right)$$
$$- \omega \cdot \psi_\beta^s - \omega \cdot L_{dq} \cdot \left( i_\alpha^s \cdot \cos 2\varphi + i_\beta^s \cdot \sin 2\varphi \right) + \omega \cdot L_1 \cdot \left( i_\beta^s \cdot \cos 2\varphi - i_\alpha^s \cdot \sin 2\varphi \right)$$
$$+ \omega \cdot L_0 \cdot i_\beta^s$$

$$u_\beta^s = R_s \cdot i_\beta^s + L_0 \cdot \frac{di_\beta^s}{dt} - L_1 \cdot \left( \frac{di_\beta^s}{dt} \cdot \cos 2\varphi - \frac{di_\alpha^s}{dt} \cdot \sin 2\varphi \right) + L_{dq} \cdot \left( \frac{di_\alpha^s}{dt} \cdot \cos 2\varphi + \frac{di_\beta^s}{dt} \cdot \sin 2\varphi \right)$$
$$+ \omega \cdot \psi_\alpha^s + \omega \cdot L_{dq} \cdot \left( i_\beta^s \cdot \cos 2\varphi - i_\alpha^s \cdot \sin 2\varphi \right) + \omega \cdot L_1 \cdot \left( i_\alpha^s \cdot \cos 2\varphi + i_\beta^s \cdot \sin 2\varphi \right)$$
$$- \omega \cdot L_0 \cdot i_\alpha^s$$

is carried out and
- using the input variable of the first arithmetic unit (11), the rotational speed and/or motor parameter(s) as output variable(s) of this system is(are) determined by means of a suitable recursive process,
the method being **characterized in that**

- the voltage setpoint space vectors ( $u_\alpha^s$, $u_\beta^s$ ) and the current actual value space vectors ($i_\alpha$, $i_\beta$) are transferred into a non-linear system with complex-valued input and output variables

$$\underline{u}_{\alpha\beta} = L_d \cdot \left( \frac{1}{2}\left( \frac{di_\alpha}{dt} + j\frac{di_\beta}{dt} \right) + \left( \frac{1}{2}\left( \frac{di_\alpha}{dt} - j\frac{di_\beta}{dt} \right) + j\omega\left( i_\alpha - ji_\beta \right) \right) \cdot e^{j2\omega t} \cdot e^{j2\varphi_0} \right)$$

$$+ L_q \cdot \left( \frac{1}{2}\left( \frac{di_\alpha}{dt} + j\frac{di_\beta}{dt} \right) - \left( \frac{1}{2}\left( \frac{di_\alpha}{dt} - j\frac{di_\beta}{dt} \right) + j\omega\left( i_\alpha - ji_\beta \right) \right) \cdot e^{j2\omega t} \cdot e^{j2\varphi_0} \right)$$

$$+ L_{dq} \cdot \left( j\left( \frac{di_\alpha}{dt} - j\frac{di_\beta}{dt} \right) - \omega\left( i_\alpha - ji_\beta \right) \right) \cdot e^{j2\omega t} \cdot e^{j2\varphi_0}$$

$$+ \frac{\partial L_d}{\partial i_d} \cdot i_d \cdot \frac{1}{2}\left( \left( \frac{di_\alpha}{dt} + j\frac{di_\beta}{dt} \right) - j\omega\left( i_\alpha + ji_\beta \right) + \left( \left( \frac{di_\alpha}{dt} - j\frac{di_\beta}{dt} \right) + j\omega\left( i_\alpha - ji_\beta \right) \right) \right.$$

$$\left. \cdot e^{j2\omega t} \cdot e^{j2\varphi_0} \right)$$

$$+ \frac{\partial L_q}{\partial i_q} \cdot i_q \cdot \frac{1}{2}\left( \left( \frac{di_\alpha}{dt} + j\frac{di_\beta}{dt} \right) - j\omega\left( i_\alpha + ji_\beta \right) - \left( \left( \frac{di_\alpha}{dt} - j\frac{di_\beta}{dt} \right) + j\omega\left( i_\alpha - ji_\beta \right) \right) \cdot e^{j2\omega t} \right.$$

$$\left. \cdot e^{j2\varphi_0} \right)$$

$$+ \Psi_p \cdot j\omega \cdot e^{j\omega t} \cdot e^{j\varphi_0}$$

$$+ R \cdot \left( i_\alpha + ji_\beta \right)$$

2. Method according to claim 1, **characterized in that** the rotational speed and/or motor parameters is (are) determined by means of a non-linear regression analysis.

3. Method according to claim 2, **characterized in that** the rotational speed and/or motor parameters is (are) determined by means of a non-linear least mean squares method.

4. Method according to claim 2, **characterized in that** an extended Kalman filter algorithm is used for the determination of the rotational speed and/or motor parameters.

5. Method according to any of the preceding claims, **characterized in that** a real-time maximum torque per ampere control (MTPA) is performed.

6. Method according to any of the preceding claims, **characterized in that** a rotational speed is determined undifferentiated.

7. Method according to claim 6, **characterized in that** a rotational speed and a rotor position are adapted independently of each other.

**Revendications**

1. Procédé pour déterminer la vitesse de rotation et/ou les paramètres d'un moteur triphasé fonctionnant avec un convertisseur de fréquence, comprenant les étapes suivantes:

   a) fournir des courants moteurs dans les coordonnées du stator ($i_\alpha$, $i_\beta$) en tant que première variable d'entrée d'une première unité arithmétique (11), la fourniture des courants moteurs s'effectuant au moyen d'une mesure de courant à suréchantillonnage,
   b) déterminer les tensions de consigne du moteur dans les coordonnées du stator à partir d'une tension intermédiaire du circuit de courant du convertisseur de fréquence et de signaux PWM (S$_1$ - S$_6$) et fournir les tensions de consigne du moteur dans les coordonnées du stator comme deuxième variable d'entrée de la première unité arithmétique (11),

c) calculer la vitesse de rotation et/ou les paramètres du moteur dans les coordonnées du stator, dans lequel

- à partir de l'équation générale de tension

$$\underline{u}_s^s = R_s \cdot \underline{i}_s^s + L_s \cdot \frac{d\underline{i}_s^s}{dt} + \omega \cdot \underline{\psi}_s^s$$

de la machine à induction dans la représentation vectorielle spatiale, une division en composantes du vecteur spatial de tension

$$u_\alpha^s = R_s \cdot i_\alpha^s + L_0 \cdot \frac{di_\alpha^s}{dt} + L_1 \cdot \left( \frac{di_\alpha^s}{dt} \cdot \cos 2\varphi + \frac{di_\beta^s}{dt} \cdot \sin 2\varphi \right) + L_{dq} \cdot \left( \frac{di_\beta^s}{dt} \cdot \cos 2\varphi - \frac{di_\alpha^s}{dt} \cdot \sin 2\varphi \right)$$
$$- \omega \cdot \psi_\beta^s - \omega \cdot L_{dq} \cdot \left( i_\alpha^s \cdot \cos 2\varphi + i_\beta^s \cdot \sin 2\varphi \right) + \omega \cdot L_1 \cdot \left( i_\beta^s \cdot \cos 2\varphi - i_\alpha^s \cdot \sin 2\varphi \right)$$
$$+ \omega \cdot L_0 \cdot i_\beta^s$$

$$u_\beta^s = R_s \cdot i_\beta^s + L_0 \cdot \frac{di_\beta^s}{dt} - L_1 \cdot \left( \frac{di_\beta^s}{dt} \cdot \cos 2\varphi - \frac{di_\alpha^s}{dt} \cdot \sin 2\varphi \right) + L_{dq} \cdot \left( \frac{di_\alpha^s}{dt} \cdot \cos 2\varphi + \frac{di_\beta^s}{dt} \cdot \sin 2\varphi \right)$$
$$+ \omega \cdot \psi_\alpha^s + \omega \cdot L_{dq} \cdot \left( i_\beta^s \cdot \cos 2\varphi - i_\alpha^s \cdot \sin 2\varphi \right) + \omega \cdot L_1 \cdot \left( i_\alpha^s \cdot \cos 2\varphi + i_\beta^s \cdot \sin 2\varphi \right)$$
$$- \omega \cdot L_0 \cdot i_\alpha^s$$

est effectuée et

- en utilisant la variable d'entrée de la première unité arithmétique (11), la vitesse de rotation et/ou le ou les paramètres du moteur en tant que variable(s) de sortie de ce système sont déterminés au moyen d'un processus récursif approprié,

le procédé étant **caractérisée en ce que**

- les vecteurs d'espace de consigne de tension ( $u_\alpha^s, u_\beta^s$ ) et les vecteurs d'espace de valeur réelle de courant ($i_\alpha$, $i_\beta$) sont transférés dans un système non linéaire avec des variables d'entrée et de sortie à valeurs complexes

$$\underline{u}_{\alpha\beta} = L_d \cdot \left( \frac{1}{2} \left( \frac{di_\alpha}{dt} + j\frac{di_\beta}{dt} \right) + \left( \frac{1}{2} \left( \frac{di_\alpha}{dt} - j\frac{di_\beta}{dt} \right) + j\omega \left( i_\alpha - ji_\beta \right) \right) \cdot e^{j2\omega t} \cdot e^{j2\varphi_0} \right)$$

$$+ L_q \cdot \left( \frac{1}{2} \left( \frac{di_\alpha}{dt} + j\frac{di_\beta}{dt} \right) - \left( \frac{1}{2} \left( \frac{di_\alpha}{dt} - j\frac{di_\beta}{dt} \right) + j\omega \left( i_\alpha - ji_\beta \right) \right) \cdot e^{j2\omega t} \cdot e^{j2\varphi_0} \right)$$

$$+ L_{dq} \cdot \left( j \left( \frac{di_\alpha}{dt} - j\frac{di_\beta}{dt} \right) - \omega \left( i_\alpha - ji_\beta \right) \right) \cdot e^{j2\omega t} \cdot e^{j2\varphi_0}$$

$$+ \frac{\partial L_d}{\partial i_d} \cdot i_d \cdot \frac{1}{2} \left( \left( \frac{di_\alpha}{dt} + j\frac{di_\beta}{dt} \right) - j\omega \left( i_\alpha + ji_\beta \right) + \left( \left( \frac{di_\alpha}{dt} - j\frac{di_\beta}{dt} \right) + j\omega \left( i_\alpha - ji_\beta \right) \right) \right.$$

$$\left. \cdot e^{j2\omega t} \cdot e^{j2\varphi_0} \right)$$

$$+ \frac{\partial L_q}{\partial i_q} \cdot i_q \cdot \frac{1}{2} \left( \left( \frac{di_\alpha}{dt} + j\frac{di_\beta}{dt} \right) - j\omega \left( i_\alpha + ji_\beta \right) - \left( \left( \frac{di_\alpha}{dt} - j\frac{di_\beta}{dt} \right) + j\omega \left( i_\alpha - ji_\beta \right) \right) \cdot e^{j2\omega t} \right.$$

$$\left. \cdot e^{j2\varphi_0} \right)$$

$$+ \Psi_p \cdot j\omega \cdot e^{j\omega t} \cdot e^{j\varphi_0}$$

$$+ R \cdot \left( i_\alpha + ji_\beta \right)$$

2. Procédé selon la revendication 1, **caractérisé en ce que** la vitesse de rotation et/ou les paramètres du moteur sont déterminés au moyen d'une analyse de régression non linéaire.

3. Procédé selon la revendication 2, **caractérisé en ce que** la vitesse de rotation et/ou les paramètres du moteur sont déterminés au moyen d'une méthode des moindres carrés non linéaire.

4. Procédé selon la revendication 2, **caractérisé en ce qu'**un algorithme de filtre de Kalman étendu est utilisé pour déterminer la vitesse de rotation et/ou les paramètres du moteur.

5. Procédé selon l'une quelconque des revendications précédentes, **caractérisé en ce qu'**une commande en temps réel du couple maximal par ampère (MTPA) est effectuée.

6. Procédé selon l'une quelconque des revendications précédentes, **caractérisé en ce qu'**une vitesse de rotation est déterminée de manière indifférenciée.

7. Procédé selon la revendication claim 6, **caractérisé en ce qu'**une vitesse de rotation et une position du rotor sont adaptés indépendamment les uns des autres.

Fig. 1

EP 4 465 520 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3723273 B1
- DE 102017221610 A1
- DE 102011112647 A1
- EP 3054583 A1
- WO 2017045810 A1